# EUROPÄISCHE PATENTSCHRIFT

(11) **EP 2 763 833 B1**
(45) Veröffentlichungstag und Bekanntmachung des Hinweises auf die Patenterteilung: **25.03.2020**
(21) Anmeldenummer: 12753524.3
(22) Anmeldetag: 05.09.2012
(51) Int. Cl.: B29C 45/16, B29C 45/14, B29L 31/30

(54) **VERFAHREN ZUR HERSTELLUNG EINES KUNSTSTOFF-ZIERTEILS**
METHOD FOR PRODUCING A PLASTIC TRIM PART
PROCÉDÉ DE FABRICATION D'UN ÉLÉMENT DE DÉCORATION EN PLASTIQUE

(30) Priorität: 05.10.2011 EP 11183930
(43) Veröffentlichungstag der Anmeldung: 13.08.2014
(73) Patentinhaber: Saint-Gobain Glass France, 92400 Courbevoie (FR)
(72) Erfinder: LUX, Thomas, 71554 Weissach im Tal (DE); RIEGLER, Ulrich, 31698 Lindhorst (DE); TURAN, Ahmet, 71573 Allmersbach im Tal (DE); BENYAHIA, Rym, 70188 Stuttgart (DE)
(74) Vertreter: Gebauer, Dieter Edmund
(86) Internationale Anmeldenummer: PCT/EP2012/067298
(87) Internationale Veröffentlichungsnummer: WO 2013/050208

(56) Entgegenhaltungen:
- EP-A1- 2 301 736
- WO-A1-2006/072177
- WO-A1-2009/123226
- WO-A2-2008/088841
- DE-A1-102008 023 499
- US-A1- 2010 196 651
- WANK J: "SPRITZGIESSTEILE MIT OBERFLACHEN-DEKOR: VERGLEICH DER VERFAHREN", PLASTVERARBEITER, HUETHIG GMBH, HEIDELBERG, DE, Bd. 44, Nr. 7, 1. Juli 1993 (1993-07-01), Seiten 70-72,74,76, XP000412526, ISSN: 0032-1338

## Beschreibung

Die Erfindung umfasst ein Verfahren zur Herstellung eines Kunststoff-Zierteils.

Im Zuge immer strengerer Vorgaben zur Kohlendioxidemission von Kraftfahrzeugen gibt es zudem starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Formteile aus polymeren Werkstoffen können dabei in praktisch jeder gewünschten Form und Geometrie hergestellt werden. Spezielle Hochleistungskunststoffe wie beispielsweise Aramide oder Kevlar weisen sehr hohe Festigkeiten und Stabilitäten auf.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtigere Rolle. Vor allem in der Automobilindustrie sind neben mechanischen Eigenschaften auch Merkmale im Bereich des Designs und der Ästhetik von großer Bedeutung.

Um verschiedene Merkmale in polymeren Werkstoffen zu vereinen, werden diese aus unterschiedlich geformten und aus unterschiedlich beschaffenen Grundmaterialien zusammengesetzt. Etablierte Verfahren zur Herstellung dieser Werkstoffe umfassen zwei oder mehr Komponenten Spritzgussverfahren. Auf diese Art und Weise ist es möglich, Merkmale wie beispielsweise Witterungsbeständigkeit, Oberflächenglanz und Bruchbeständigkeit oder Torsionsstabilität miteinander zu vereinen. Zudem können die Anteile sehr teurer Werkstoffe reduziert werden.

DE 196 33 959 A1 offenbart einen Formkörper aus einem Träger und einem äußeren Zierfilm. Der äußere Film besitzt eine Zier- und eine Schutzschicht, wobei die Schutzschicht aus einer photopolymerisierbaren Harzzusammensetzung besteht.

WO 2006/094484 A1 offenbart ein Verfahren zur Herstellung eines flächigen, zwei Komponenten enthaltenden Kunststoffkarosserieteils. In einer bevorzugten Ausführungsform ist die erste Komponente aus einem transparenten Polycarbonat und die zweite Komponente ein opakes Polycarbonat.

DE 197 22 551 A1 offenbart ein Verfahren zur Herstellung von Kunststoffteilen im Zwei-Komponenten-Spritzgussverfahren.

EP 1 695 808 A1 offenbart ein Zierteil für ein Kraftfahrzeug, beispielsweise eine Zierleiste. Das Zierteil umfasst ein Trägerteil aus einem thermoplastischen Kunststoff und ein Deckteil. Das Zierteil wird bevorzugt über einen Mehr-Komponenten-Spritzgussprozess hergestellt.

Die europäische Patentanmeldung EP 2301736 sowie die internationale Patentanmeldung WO-A-2009123226 zeigen jeweils ein Verfahren zum Hinterspritzen eines dekorativen Elements mit einem Trägerteil, wobei auf den hierbei erzeugten Verbund ein Deckteil aufgespritzt wird.

Eine etablierte Methode zur Erzeugung optischer Effekte und zur Oberflächenversiegelung ist das Verfahren zur Folienhinterspritzung (FIM/ film insert molding). In diesem Verfahren wird eine entsprechende Folie in das Spritzgießwerkzeug eingelegt und mit einem geeigneten Kunststoff hinterspritzt. Auf diese Art und Weise lassen sich die Oberflächeneigenschaften und Geometrie von polymeren Werkstoffen gezielt und vielseitig beeinflussen und modifizieren. Eine wichtige Vorraussetzung für die Anwendung des Verfahrens der Folienhinterspritzung sind jedoch temperaturstabile Folien. Zudem müssen auch auf der Folie befindliche Aufdrucke soweit temperaturbeständig sein, dass sie die Hinterspritzung mit einem flüssigen Polymer wie Polycarbonat überstehen. Das Verfahren erlaubt zudem nicht die gezielte Modifizierung eines Werkstoffes innerhalb der polymeren Phase. Insbesondere transparente Werkstoffe bieten hierbei einen großen Spielraum für räumliche und optische Gestaltungsmöglichkeiten.

Die Erfindung hat die Aufgabe, ein Verfahren bereitzustellen, welches die optischen Eigenschaften und das Aussehen eines Werkstoffkörpers mit teilweise transparenten Abschnitten einstellen und verändern kann.

Die Aufgabe der Erfindung wird durch ein Verfahren gemäß Anspruch 1 gelöst. Bevorzugte Ausführungen gehen aus den Unteransprüchen hervor.

Das erfindungsgemäße Verfahren zur Herstellung eines Kunststoff-Zierteils umfasst einen ersten Schritt in dem eine polymere Folie in ein Spritzgusswerkzeug eingelegt wird. Im Anschluss wird die polymere Folie mit einer opaken polymeren Materialphase hinterspritzt, welche das Trägerteil des Kunststoff-Zierteils bildet. Der Begriff "Folie" schließt im Sinne der Erfindung sowohl homogene, ein- oder mehrkomponentige Folien, wie auch aus unterschiedlichen oder gleichen Materialien gewobene, geflochtene oder geschichtete mehrkomponente Folien oder Textilien mit ein. Die polymere Folie wird bevorzugt über elektrostatische Wechselwirkungen auf der Stahloberfläche des Spritzgusswerkzeugs fixiert. Die elektrostatische Aufladung wird bevorzugt über Aufladeelektroden, welche von Aufladegeneratoren mit Hochspannung gespeist werden, berührungsfrei auf die polymere Folie übertragen. Alternativ kann die polymere Folie mechanisch oder über Vakuumansaugung im Spritzgusswerkzeug fixiert werden. Das flüssige Ausgangsmaterial des polymeren Trägermaterials wird an die Folie im Spritzgusswerkzeug gespritzt und es wird auf diese Weise ein stoffschlüssiger Verbund zwischen polymerer Folie und Trägerteil erzielt. Das polymere Trägerteil sorgt für die Stabilität des Kunststoff-Zierteils und beinhaltet polymere Materialien mit einer möglichst hohen Festigkeit, Kratzfestigkeit, Schlagzähigkeit oder Kerbschlagzähigkeit und geringere Bruchneigung. In einer alternativen Ausgestaltungsform wird zunächst das Trägerteil spritzgegossen und nach dem Öffnen des Spritzgusswerkzeugs eine polymere Folie, bevorzugt eine selbstklebende polymere Folie auf dem fertigen Trägerteil angeordnet. Die polymere Folie weist einen bei einer Temperatur von mindestens 320 °C zersetzungsstabilen, opaken oder teilopaken Aufdruck auf. Der Ausdruck "teilopaker Aufdruck" umfasst im Sinne der Erfindung auch farbige Aufdrucke und Drucke in Graustufen. Der opake Aufdruck enthält eine Druckfarbe mit temperaturstabilen organischen Pigmenten, beispielsweise Urethan-Acrylat Polymere, Kohlenstoff, Azofarbstoffe oder polycyclische Verbindungen. Alternativ können anorganische Pigmente wie Titandioxid, Ruß, Zinnober, Bismut- (Bismutvanadat), Spinellpigmente, Blei-, Quecksilber-, Zirkon-, Eisen-, Cadmium-, Kupfer-, Kobalt-, Nickel-, Chrompigmente; Aluminiumsilikate (Ultramarin), enthalten sein. Aufgrund der höheren Temperaturstabilität werden bevorzugt anorganische Pigmente verwendet. In einer alternativen Ausgestaltungsform können die Farbpigmente auch homogen in die polymere Folie eingearbeitet sein. Dies kann beispielsweise durch Beimischung der Farbpigmente zu einem Granulat der polymeren Folie mit anschließender Extrusion der resultierenden Mischung erfolgen. In einer weiteren optionalen Möglichkeit können die Farbpigmente in einer Lösung auf die polymere Folie aufgesprüht werden. In einem abschließenden Schritt wird ein polymeres Deckteil auf den Aufbau aus polymerer Folie und polymerem Trägerteil aufgespritzt. Das polymere Deckteil wird optisch transparent ausgebildet. Das polymere Deckteil weist bevorzugt eine mittlere (über die Wellenlänge gemittelte) optische Transparenz von mehr als 60 %, bevorzugt mehr als 80 % im Bereich von 400 nm bis 800 nm auf. Die hohe optische Transparenz verleiht dem polymeren Deckteil ein glasähnliches Aussehen bei nur geringem Eigengewicht und einer hohen Verformbarkeit.

Das Kunststoffzierteil wird im Mehrkomponenten-Spritzguss- oder im Mehrkomponenten-Spritzprägeverfahren, bevorzugt in Kombination mit Wendeplattentechnologie, Drehteller- und/oder Indexplattentechnologie hergestellt. Alternativ kann das Kunststoffzierteil auch alleine über Wendeplattentechnologie, Drehteller- und/oder Indexplattentechnologie hergestellt werden.

Das polymere Trägerteil enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC und/oder Copolymere oder Gemische davon.

Das polymere Trägerteil wird opak ausgebildet. Die opake Färbung des polymeren Trägerteils hebt durch den Kontrast zum transparenten polymeren Deckteil den Aufdruck der polymeren Folie hervor.

Das polymere Trägerteil wird bevorzugt in einer Dicke von 0,5 mm bis 10 mm, besonders bevorzugt 1 mm bis 5 mm spritzgegossen. Die Dicke des polymeren Trägerteils ist von den Dimensionen und Stabilitätsanforderungen des fertigen Bauteils abhängig.

Auf das polymere Deckteil wird ein Hardcoat, besonders bevorzugt thermisch- oder UV-härtende Lacke, insbesondere bevorzugt Polysiloxane, Polyacrylate, Polymethacrylate und/oder Gemische oder Copolymere davon aufgetragen. Der Hardcoat verbessert die Beständigkeit gegenüber Alterung, mechanischen Abnutzungserscheinungen, Kratzbeschädigungen, Witterungseinflüssen, UV-Strahlung und/oder aggressiven Chemikalien aus der Luft oder dem Spritzwasser. Zusätzlich kann der Hardcoat auch noch dekorative Funktionen wie Glanz- oder Perleffekte wahrnehmen.

Die polymere Folie enthält bevorzugt Polycarbonate (PC), Polymethylmethacrylat (PMMA), Polyethylenterephthalat (PET), Polybutylenterephthalat (PBT), Polycarbonat-Polybutylenterephthalat (PBT/PC), Styrol-Acrylnitril (SAN) und/oder Copolymere oder Gemische davon.

Die polymere Folie weist bevorzugt eine Dicke von 0,1 mm bis 3 mm, bevorzugt 0,12 mm bis 1 mm auf. Die Größe kann in Abhängigkeit von der Dimensionierung des polymeren Trägerteils und des polymeren Deckteils variieren. Die polymere Folie wird thermisch vorgeformt. Die vorangehende Formgebung der polymeren Folie erlaubt eine bessere Anpassung an die Geometrie des Deckteils. Dies vermeidet zudem bei der Hinterspritzung der polymeren Folie mit dem polymeren Trägerteil eine Unterwanderung der polymeren Materialphase zwischen dem polymeren Trägerteil und der polymeren Folie.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 eine schematische Ansicht eines Kunststoff-Zierteils nach dem Stand der Technik,
Figur 2 eine schematische Ansicht eines durch das erfindungsgemäße Verfahren hergestellten Kunststoff-Zierteils und
Figur 3 ein Fließschema des erfindungsgemäßen Verfahrens zur Herstellung eines Kunststoff-Zierteils.

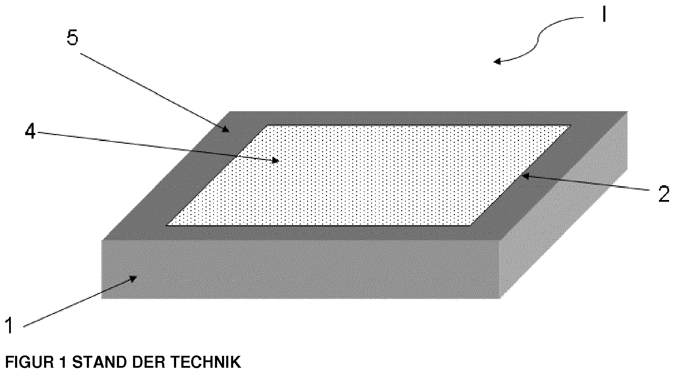

Figur 1 zeigt eine schematische Ansicht eines Kunststoff-Zierteils (I) nach dem Stand der Technik. Auf einem polymeren Trägerteil (1), beispielsweise einem Teilstück des Armaturenbretts eines Kraftfahrzeuges, ist eine polymere Folie (2) mit dekorativem Aufdruck (4) angeordnet. Der Randbereich (5) kann sowohl in der gleichen Farbe wie das polymere Trägerteil (1) als auch in einer anderen Farbe ausgelegt sein.

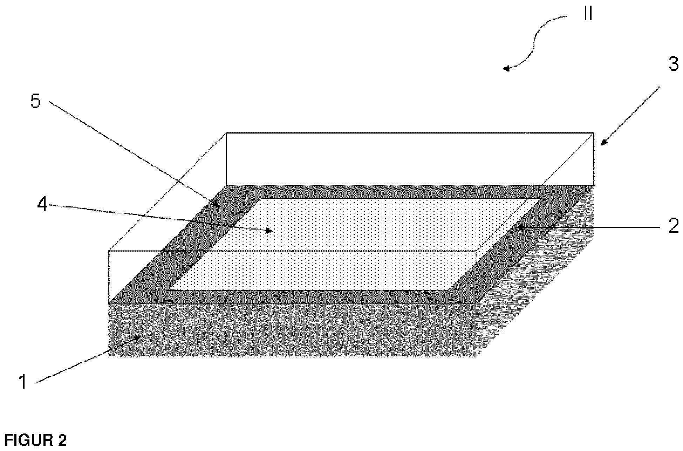

Figur 2 zeigt eine schematische Ansicht eines mit dem erfindungsgemäßen Verfahren hergestellten Kunststoff-Zierteils (II). Auf einem opaken polymeren Trägerteil (1) aus Acrylnitril-Butadien-Styrol (ABS) ist ein transparentes polymeres Deckteil (3) aus PC oder PMMA angeordnet. Zwischen dem polymeren Trägerteil (1) und dem polymeren Deckteil (3) ist eine polymere Folie (2) mit dekorativem Aufdruck (4) angeordnet. Das transparente polymere Deckteil (3) schützt die polymere Folie (2) vor UV-Strahlung, Abrieb sowie Beschädigung und erzeugt gleichzeitig einen glasartigen Effekt auf der Oberfläche des dekorativen Aufdrucks (4) (beispielsweise Spinellschwarz Nr. 38, Kupfer-Chrom-Eisen-Spinell, Kremer Pigmente GmbH & Co. KG, Aichstetten, Deutschland) auf der polymeren Folie. Die polymere Folie (2) mit dekorativem Aufdruck (4) wird von dem Randbereich (5) umschlossen.

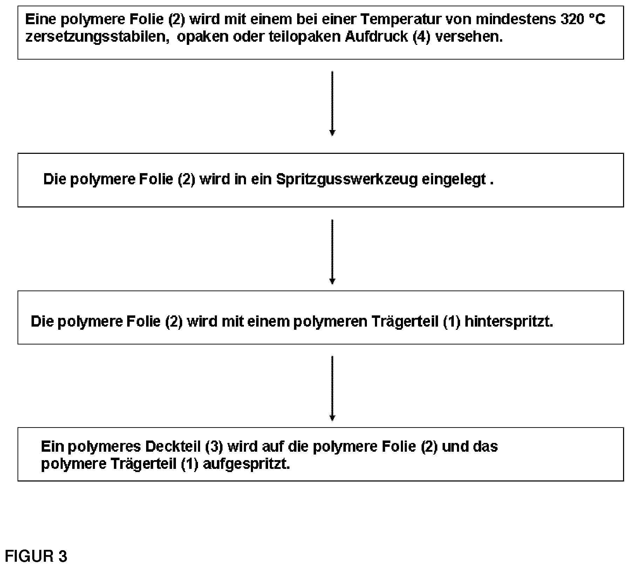

Figur 3 zeigt ein Fließschema des erfindungsgemäßen Verfahrens zur Herstellung eines erfindungsgemäßen Kunststoff-Zierteils (II). In einem ersten Verfahrensschritt wird eine polymere Folie (2) mit einem bei einer Temperatur von mindestens 320 °C zersetzungsstabilen, opaken oder teilopaken Aufdruck (4) versehen. Der Aufdruck (4) wird bevorzugt über ein Siebdruck- oder Ink-Jetdruckverfahren aufgetragen. Die polymere Folie (2) wird anschließend in ein Spritzgusswerkzeug eingelegt und mit einem polymeren Trägerteil (1) hinterspritzt (dem verflüssigten polymeren Material des polymeren Trägerteils). In einem abschließenden Schritt wird ein polymeres Deckteil (3) auf die polymere Folie (2) und das polymere Trägerteil (1) aufgespritzt. Nach dem Aushärten des polymeren Deckteils (3) wird bevorzugt noch ein Hardcoat zur Verbesserung der mechanischen und chemischen Beständigkeit aufgetragen. Insbesondere bei einem Deckteil aus Polycarbonat (PC) wird bevorzugt ein Hardcoat aufgetragen. Der Hardcoat kann über Flut-, Sprüh- oder Tauchverfahren auf dem polymeren Deckteil aufgetragen werden. Bei Beschichtung des polymeren Deckteils (2) mit Polysiloxan-Hardcoats können sogar die sehr hohen Anforderungen, welche üblicherweise nur an Sicherheitsverglasung gestellt werden (Scheiben aus starrem Kunststoff, ECE R43 Anhang 14, Klasse /M), erfüllt werden.

### Bezugszeichenliste

- (1): polymeres Trägerteil
- (2): polymere Folie
- (3): polymeres Deckteil
- (4): Aufdruck
- (5): Randbereich
- (I): Kunststoff-Zierteil nach dem Stand der Technik
- (II): Kunststoff-Zierteil

## Patentansprüche

1. Verfahren zur Herstellung eines Kunststoff-Zierteils, wobei
a. eine polymere Folie (2) in ein Spritzgusswerkzeug eingelegt wird wobei die polymere Folie (2) einen bei einer Temperatur von mindestens 320 °C zersetzungsstabilen, opaken oder teilopaken Aufdruck (4) aufweist,
b. die polymere Folie (2) mit einem polymeren Trägerteil (1) hinterspritzt wird, wobei das polymere Trägerteil (1) opak ausgebildet wird, und
c. ein transparentes polymeres Deckteil (3) auf die polymere Folie (2) und das polymere Trägerteil (1) aufgespritzt wird,
wobei die polymere Folie (2) thermisch vorgeformt wird, und
wobei auf das transparente polymere Deckteil (3) ein Hardcoat (6), bevorzugt thermisch- oder UV-härtende Lacke, besonders bevorzugt Polysiloxane, Polyacrylate, Polymethacrylate und/oder Gemische oder Copolymere davon aufgetragen wird.

2. Verfahren nach Anspruch 1, wobei das polymere Trägerteil (1) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC und/oder Copolymere oder Gemische davon enthält.

3. Verfahren nach einem der Ansprüche 1 bis 2, wobei das polymere Trägerteil (1) in einer Dicke von 0,5 mm bis 10 mm, bevorzugt 1 mm bis 5 mm spritzgegossen wird.

4. Verfahren nach einem der Ansprüche 1 bis 3, wobei die polymere Folie (2) Polycarbonate (PC), Polymethylmethacrylat (PMMA), Polyethylenterephthalat (PET), Polybutylenterephthalat (PBT), Polycarbonat-Polybutylenterephthalat (PBT/PC), Styrol-Acrylnitril (SAN) und/oder Copolymere oder Gemische davon enthält.

5. Verfahren nach einem der Ansprüche 1 bis 4, wobei die polymere Folie (2) eine Dicke von 0,1 mm bis 3 mm, bevorzugt 0,12 mm bis 1 mm aufweist.

6. Verfahren nach einem der Ansprüche 1 bis 5, wobei die polymere Folie (2) über elektrostatische Entladung, mechanisch oder über Vakuumansaugung im Spritzgusswerkzeug fixiert wird.

## Claims

1. Method for producing a plastic trim part, wherein
a. a polymer film (2) is laid in an injection mold, wherein the polymer film (2) has an opaque or partially opaque imprint (4) stable against decomposition at a temperature of at least 320 °C,
b. the polymer film (2) is back injected with a polymer carrier part (1), wherein the polymer carrier part (1) is implemented opaque, and
c. a transparent polymer cover part (3) is injected onto the polymer film (2) and the polymer carrier part (1),
wherein the polymer film (2) is thermally preformed, and
wherein a hardcoat (6), preferably thermal-cured or UV-cured varnishes, particularly preferably polysiloxanes, polyacrylates, polymethacrylates, and/or mixtures or copolymers thereof, is applied on the transparent polymer cover part (3).

2. Method according to claim 1, wherein the polymer carrier part (1) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), preferably acrylonitrile butadiene styrene (ABS), acrylonitrile styrene acrylester (ASA), acrylonitrile butadiene styrene - polycarbonate (ABS/PC), PET/PC, PBT/PC, and/or copolymers or mixtures thereof.

3. Method according to one of claims 1 or 2, wherein the polymer carrier part (1) is injection molded in a thickness from 0.5 mm to 10 mm, preferably 1 mm to 5 mm.

4. Method according to one of claims 1 through 3, wherein the polymer film (2) contains polycarbonates (PC), polymethyl methacrylate (PMMA), polyethylene terephthalate (PET), polybutylene terephthalate (PBT), polycarbonate-polybutylene terephthalate (PBT/PC), styrene acrylonitrile (SAN), and/or copolymers or mixtures thereof.

5. Method according to one of claims 1 through 4, wherein the polymer film (2) has a thickness from 0.1 mm to 3 mm, preferably 0.12 mm to 1 mm.

6. Method according to one of claims 1 through 5, wherein the polymer film (2) is fixed in the injection mold by electrostatic discharge, mechanically, or by vacuum suction.

## Revendications

1. Procédé de fabrication d'une pièce ornementale en plastique, où
a. un film polymère (2) est inséré dans un moule d'injection, où le film polymère (2) présente une empreinte (4) opaque ou partiellement opaque, stable à la dégradation à une température d'au moins 320ºC,
b. le film polymère (2) est injecté par l'arrière avec un élément de support polymère (1), où l'élément de support polymère (1) est formée de façon opaque, et
c. un élément de couverture polymère (3) transparent est injecté sur le film polymère (2) et l'élément de support polymère (1), où le film polymère (2) est préformé thermiquement, et
où un revêtement dur (6) est appliqué sur l'élément de couverture polymère (3) transparent, de préférence un revêtement thermodurcissable ou durcissable par UV, de manière particulièrement préférée des polysiloxanes, des polyacrylates, des polyméthacrylates et/ou des mélanges ou des copolymères de ceux-ci.

2. Procédé selon la revendication 1, où l'élément de support polymère (1) contient du polyéthylène (PE), des polycarbonates (PC), du polypropylène (PP), du polystyrène, du polybutadiène, du polyester, des polyamides, du polytéréphtalate d'éthylène (PET), du polytéréphtalate de butylène (PBT), de préférence du acrylonitrile-butadiène-styrène (ABS), de l'acrylonitrile-styrène-acrylate (ASA), de l'acrylonitrile-butadiène-styrène-polycarbonate (ABS/PC), PET/PC, PBT/PC, du PET/PC, du PBT/PC et/ou des copolymères ou des mélanges de ceux-ci.

3. Méthode selon l'une des revendications 1 à 2, où l'élément de support polymère (1) est moulé par injection avec une épaisseur de 0,5 mm à 10 mm, de préférence de 1 mm à 5 mm.

4. Méthode selon l'une des revendications 1 à 3, où le film polymère (2) contient des polycarbonates (PC), du polyméthacrylate de méthyle (PMMA), du polytéréphtalate d'éthylène (PET), du polytéréphtalate de butylène (PBT), du polytéréphtalate de butylène-polycarbonate (PBT/PC), du styrène acrylonitrile (SAN) et/ou des copolymères ou des mélanges de ceux-ci.

5. Méthode selon l'une des revendications 1 à 4, où le film polymère (2) présente une épaisseur de 0,1 mm à 3 mm, de préférence 0,12 mm à 1 mm.

6. Méthode selon l'une de revendications 1 à 5, où le film polymère (2) est fixé dans le moule d'injection par décharge électrostatique, mécaniquement ou par aspiration de vide.
